# EUROPÄISCHE PATENTSCHRIFT

(11) **EP 3 570 966 B1**
(45) Veröffentlichungstag und Bekanntmachung des Hinweises auf die Patenterteilung: **10.03.2021**
(21) Anmeldenummer: 18700052.6
(22) Anmeldetag: 04.01.2018
(51) Int. Cl.: B01F 3/04, C02F 3/20

(54) **BELÜFTUNGSELEMENT**
VENTILATION ELEMENT
ÉLÉMENT D'AÉRATION

(30) Priorität: 18.01.2017 DE 102017100938
(43) Veröffentlichungstag der Anmeldung: 27.11.2019
(73) Patentinhaber: Aqseptence Group GmbH, 65326 Aarbergen (DE)
(72) Erfinder: ZHANG, Jiansan, 63755 Alzenau (DE)
(74) Vertreter: Keil & Schaafhausen Patentanwälte PartGmbB
(86) Internationale Anmeldenummer: PCT/EP2018/050170
(87) Internationale Veröffentlichungsnummer: WO 2018/134052

(56) Entgegenhaltungen:
- EP-A1- 0 549 518
- DE-A1- 2 261 994
- JP-A- 2007 190 462
- JP-U- S63 152 632
- US-A- 3 490 752
- US-A- 3 754 740

## Beschreibung

Die Erfindung betrifft ein Belüftungselement zum Einbringen eines Gases in eine Flüssigkeit. Das Belüftungselement weist hierzu wenigstens einen Gasanschluss, wenigstens einen Trägerteller und wenigstens eine elastisch verformbare Membran auf, die mit dem wenigstens einen Gasanschluss und/oder dem wenigstens einen Trägerteller verbunden ist. Ein zwischen der wenigstens einen Membran und dem wenigstens einen Trägerteller, z.B. bei Druckbeaufschlagung, ausbildbarer Raum steht mit dem Gasanschluss in Strömungsverbindung.

Belüftungselemente werden vornehmlich bei biologischer Abwasserreinigung eingesetzt, um die Bakterien eines Schlamm-Wasser-Gemisches mit gelöstem Sauerstoff zu versorgen, damit die organischen und anorganischen Inhaltsstoffe im Abwasser abgebaut oder oxidiert werden.

Entsprechend der Art der Sauerstoffeintragung wird zwischen einer mechanischen Belüftung (auch Oberflächenbelüftung genannt) und einer Druckluftbelüftung unterschieden. Die Aqseptence Group GmbH bietet beispielsweise unter der Marke MAMMUTROTOR® mechanische Belüftungssysteme an, wobei Sauerstoff aus der Luft mit Hilfe einer horizontal rotierenden Walze mit Wasser in intensiven Kontakt gebracht wird und dadurch der Sauerstoff in das Wasser eingetragen wird.

Weiter bietet die Aqseptence Group GmbH unter den Marken ROEFLEX® und BIOFLEX® Druckluftbelüftungselemente an, bei denen Druckluft mit Hilfe von Gebläsen oder Kompressoren erzeugt wird und über ein Rohr-Verteilungssystem zu einzelnen Belüftungselementen, die am Boden des biologischen Reaktionsbeckens installiert sind, gebracht wird. Die Druckluft tritt dort aus den speziellen Öffnungen der Elemente als einzelne Blasen aus, die durch das Schlamm-Wasser-Gemisch an die Wasseroberfläche aufsteigen, wobei beim Aufstieg der Blasen ein intensiver Stoffaustausch zwischen Luftblasen und Wasser stattfindet und dabei der Sauerstoff ins Wasser gelöst wird.

Belüftungsrohre aus starrem Metall oder Kunststoff werden praktisch ausschließlich zur Erzeugung von Vermischungen und Umwälzungen von Wasser durch grobe Luftblasen, zum Beispiel in den belüfteten Sandfängen, genutzt, und sind für einen guten Sauerstoffeintrag eher ungeeignet. Zudem kommt es in solchen Belüftungsrohren schnell zu Ablagerungsbildung und Verstopfung durch Feststoffpartikel, die sich im Inneren der Rohre ansetzen, sobald die Luftzufuhr gestoppt wird.

Es existieren grob- und mittelblasige Belüftungsrohre aus starrem Metall oder Kunststoff, feinblasige Belüfter mit keramischem Ausgasungsteil, mittel- und feinblasige Belüfter mit einer perforierten, elastischen Membran aus EPDM, Silicon oder TPU, die auf einen starren Stützkörper aufgezogen und befestigt wird. Dabei können die Belüfter in Form von runden oder ovalen Rohren, runden Tellern, kleineren, länglichen Platten oder großen, rechteckigen Platten gestaltet sein. Die Perforierung der Membrane kann sich in Form, Größe und Dichte unterscheiden, während die Dicke der Membrane meist dem Design und der mechanischen Beanspruchung angepasst ist.

Auch Keramik-Belüfter finden trotz guten Sauerstoffeintragsverhaltens immer weniger Anwendung, weil der keramische Ausgasungsteil, sowohl als Teller, Platte oder auch als Röhre, sich leicht durch Schlammfeststoff-Partikel zusetzen kann, sobald die Luftzufuhr gestoppt wird, bzw. weil die feinen Keramikkapillare biologisch dazu neigen zuzuwachsen. Dies erfordert, dass sie häufig chemisch gereinigt werden müssen. Dazu müssen die Keramikteile eine gewisse Mindestdicke aufweisen, um genügende Druckfestigkeit (Druckunterschied innen und außen) und Bruchsicherheit zu bieten, wobei höhere Druckverluste beim Austreten der Blasen in Kauf genommen werden.

Vereinzelt werden auch Belüfter angeboten, die aus einem starren Material mit sehr feinem Schlitzgebilde bestehen, und zu den feinblasigen Belüftern gezählt werden.

Die Wirtschaftlichkeit der Druckluftbelüftungssysteme hängt von verschiedenen Faktoren ab, nämlich unter anderem von der Größe der erzeugten Blasen, dem Druckverlust beim Luftaustritt aus den Belüftern, der Gleichmäßigkeit der Blasengrößen und der flächenmäßigen Verteilung.

In der modernen Abwasserreinigung werden hauptsächlich feinblasige Membranbelüfter eingesetzt, weil diese, neben den relativ guten Sauerstoffeintragseigenschaften, sehr verstopfungssicher sind. Zudem verschließen sich die Öffnungen bei Betriebsunterbrechungen wieder, so dass solche Belüfter auch für einen flexiblen Betrieb geeignet sind.

US 3 490 752 A offenbart ein Belüftungselement entsprechend dem Oberbegriff des Anspruchs 1.

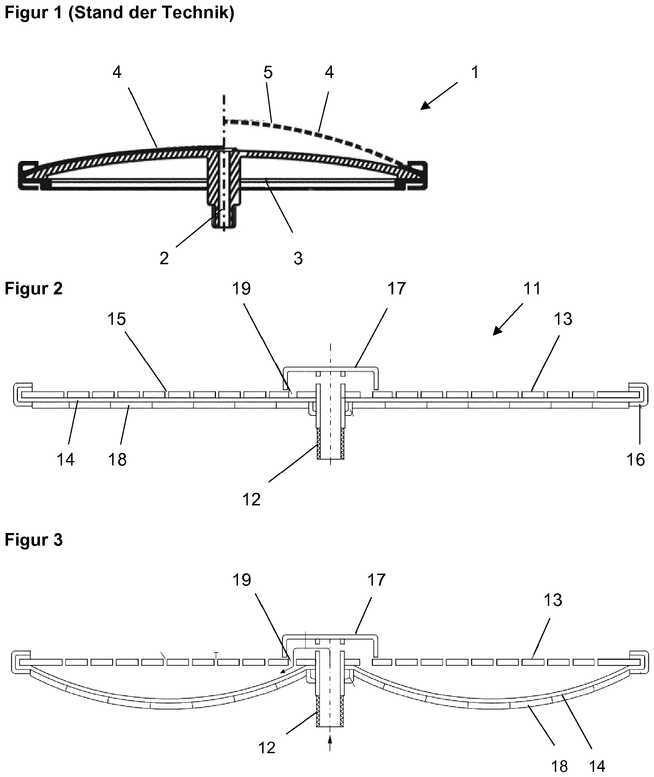

Figur 1 zeigt schematisch in Schnittansicht einen solchen Membranbelüfter, wie er von der Aqseptence Group GmbH unter den Marken ROEFLEX® vertrieben wird. Dieser Belüfter 1 besteht im Wesentlichen aus einer zentralen Gaszufuhr 2, einem starren Trägerteller 3 und einer flexiblen Membran 4, die hermetisch mit dem Trägerteller 3 verbunden ist. Die Membran 4 ist mit einer Perforation 5 versehen, aus der Gas entweichen kann, wenn Gas unter Überdruck aus der Gaszufuhr 2 in den Belüfter 1 eingebracht wird. Hierbei hebt sich die Membran 4 von einer Auflage Struktur des Trägertellers 3 ab, so dass zwischen dem Trägerteller 3 und der Membran 4 ein mit Gas gefüllter Raum entsteht. Die linke Seite in Figur 1 zeigt dabei den Zustand des Belüfters 1, wenn kein Gas zugeführt wird, wogegen die rechte Seite in Figur 1 den Zustand zeigt, wenn Gas in den Belüfter 1 eingebracht wird.

Die Nachteile der Membranbelüfter liegen z.B. darin, dass die Druckluft zuerst die Perforation (z.B. enge Schlitze) aufspreizen muss, um als Blasen auszutreten. Hierbei geht Energie in Form von Druckverlust verloren. Der Druckverlust verstärkt sich, wenn kleinere Schlitzung bzw. Nadelstiche gewählt werden, um kleinere Blasen zu erzeugen und dadurch einen verbesserten Sauerstoffübergang zu erzielen. Auf der anderen Seite entsteht aufgrund der Druckunterschiede zwischen der Innen- und der Außenseite der Membran bei flachen bzw. plattenförmigen Membranen eine Aufwölbung der Membran, die sich verstärkt, je weiter die Position von den befestigten bzw. bespannten Stellen entfernt ist. Diese Aufwölbung zu einer ungleichmäßigen Verteilung der Blasen führen, da teilweise mehr Blasen an Stellen austreten, die stärker gewölbt sind. Es kann auch zu einer Art Einschnürung der Blasen beim Aufsteigen kommen, die zu mehr Koaleszenzbildung und damit zu größeren Blasen und schlechterem Sauerstoffübergang führt.

Die vorliegende Erfindung hat die Aufgabe, einen verbesserten Druckluftbelüfter zu bilden, der die vorbeschriebenen Nachteile vermeidet und einen guten Sauerstoffübergang erreicht.

Diese Aufgabe wird erfindungsgemäß durch ein Belüftungselement entsprechend Anspruch 1 gelöst.

Eine zentrale Idee der Erfindung liegt darin, eine fein perforierte, starre Platte (Trägerteller), die beispielsweise aus Metall oder Kunststoff bestehen kann, als flache Ausgasungsfläche zu nutzen. In Einbaulage, d.h. bei Verwendung des erfindungsgemäßen Belüftungselements zum Einbringen von Gas in eine Flüssigkeit, weist der Trägerteller nach oben und die Membran ist unterhalb des Trägertellers angeordnet.

Da die Membran entweder selbst eine geringere Dichte als Wasser aufweist und/oder mittels Schwimmkörpern Auftrieb erfährt, wird die Membran von unten gegen den Trägerteller angelegt, wenn durch die Gaszufuhr kein Gas in das Belüftungselement eingebracht wird. Im Ruhezustand, d.h. ohne Zufuhr von Druckluft, liegt die Membran von unten dicht an der perforierten Platte an und verschließt somit die Öffnungen der Ausgasungsplatte (Trägerteller) von unten. Dies verhindert, dass Wasser und/oder Schmutzpartikel in den Zwischenraum zwischen Membran und Trägerteller eindringen können. Dazu trägt sowohl die Aufschwimmkraft der Membran als auch in sehr geringem Maß der geringfügig höhere Wasserdruck von unten, gegenüber dem Wasserdruck von der Oberseite der starren Platte, bei. Bei Druckluftzufuhr wird die flexible Membran nach unten, gegen ihre Aufschwimmkraft gedrückt, wodurch ein ausgedehnter Zwischenraum geschaffen wird, der es ermöglicht, dass die Druckluft an alle perforierten Öffnungen der starren Ausgasungsplatte und durch diese ins Wasser gelangt.

Die Luftzufuhr zum so konstruierten Belüftungselement kann so ausgebildet sein, dass diese im Ruhezustand zusätzlich durch die Membran verschlossen wird, und damit verhindert, dass Wasser und Schmutzpartikel, auch bei Undichtigkeiten im Belüftungselement, ins Luftverteilungssystem gelangen kann.

Vorzugsweise sind der wenigstens eine Trägerteller und die wenigstens eine Membran als im unbelasteten Zustand zumindest bereichsweise aufeinanderliegende, beispielsweise kreisrunde, Scheiben ausgebildet, die an ihrem äußeren Rand hermetisch miteinander verbunden sind. Durch diese Verbindung kann zwischen dem Trägerteller und der Membran ein gasdichter Raum gebildet werden, der sich bei Gaszufuhr aufbläht, um eine gleichmäßige Versorgung der Gasaustrittsöffnungen zu erreichen, und der ohne Gaszufuhr ein minimales Volumen einnimmt. Dieses minimale Volumen kann so gering sein, dass die Membran flächig auf dem Trägerteller aufliegt, ohne dass nennenswerte Gaseinschlüsse zwischen Membran und Trägerteller vorhanden sind.

Der wenigstens eine Trägerteller und die wenigstens eine Membran sind an ihrem äußeren Rand, beispielsweise mittels eines Klemmelements und/oder einer Verschraubung, miteinander verbunden. Ein solches Klemmelement kann ein, zum Beispiel umlaufender, Kragen sein, der die Membran und den Trägerteller gegeneinander gepresst hält. Hierzu kann beispielsweise die Membran und/oder der Trägerteller mit einer Wulst versehen sein, die in eine entsprechende Vertiefung des Klemmelements eingreift. Umgekehrt kann auch eine Wulst des Klemmelements in eine Vertiefung der Membran oder des Trägertellers eingreifen. Alternativ oder zusätzlich hierzu können der wenigstens eine Trägerteller und die wenigstens eine Membran an ihrem äußeren Rand mittels einer Verklebung und/oder Verschweißung miteinander verbunden sein.

Vorzugsweise besteht der wenigstens eine Trägerteller aus einem im Vergleich zur Membran steiferen Material, insbesondere aus Metall oder Kunststoff. Insbesondere Metallwerkstoffe, wie z.B. Edelstahl, und auch Kunststoffe mit hoher Festigkeit haben den Vorteil, bereits bei sehr dünnen Wandstärken ausreichende mechanische Stabilität als Element, und ausreichende Widerstandsfähigkeit gegen Druckunterschied zwischen oberhalb und unterhalb der Begasungsplatte (Trägerteller) zu besitzen. Somit ist es möglich, dass durch gezielte Wahl dünnerer Wandstärken eine weitere Minimierung des Druckverlusts beim Austreten der Luftblasen erzielt werden kann.

Gegenüber den derzeitigen gängigen Membranbelüftungselementen haben die gemäß dieser Erfindung gebildeten Belüftungselemente noch den Vorteil, dass die Materialoberfläche der starren Ausgasungsfläche (Trägerteller) speziell behandelt werden kann, zum Beispiel so beschichtet oder behandelt, dass die Luftblasen eher zum Abperlen neigen, oder bessere Widerstandsfähigkeit gegen bakterielle Bewüchse, Verschmutzungen und Ablagerungen besitzt, während solche Maßnahmen bei weichen, flexiblen Membranen schwierig zu erreichen sind. Bei Ausgasungsflächen aus Kunststoff ist es möglich, bereits bei der Wahl der Materialmischungen die Inhaltstoffe so zu wählen, dass die oben beschrieben Wunscheigenschaften berücksichtigt werden. Damit lässt sich eine weitere Verbesserung des Sauerstoffeintrags erzielen und die Haltbarkeit wird verbessert. Insbesondere kann der wenigstens eine Trägerteller mit einer Beschichtung und/oder Ausrüstung versehen sein, die das Abperlen von Gasblasen erleichtert und/oder die bakteriellen Bewüchsen, Verschmutzungen und/oder Ablagerungen entgegenwirkt.

Vorzugsweise ist die wenigstens eine Membran eine weiche, flexible Kunststoffmembran, die aus einem wasser- und luftdichten Material besteht. Nach einer Ausführungsform der Erfindung ist die wenigstens eine Membran nicht mit Gasaustrittsöffnungen versehen.

Erfindungsgemäss ist vorgesehen, dass die wenigstens eine Membran zumindest abschnittsweise einen mehrschichtigen Aufbau aufweist, wobei zwischen zwei Schichten der wenigstens einen Membran Schwimmkörper, die eine geringere Dichte als Wasser aufweisen, eingeschlossen sind. Zusätzlich kann die wenigstens eine Membran auf ihrer dem wenigstens einen Trägerteller abgewandten Seite mit wenigstens einem Schwimmkörper, der eine geringere Dichte als Wasser aufweist, verbunden sein und/oder ein offenes oder geschlossenes Gaspolster aufweist. Diese Maßnahmen bewirken, dass die Membran, die beispielsweise deutlich leichter als Wasser ist, darin aufschwimmt. Vorzugsweise ist die Membran mit einer solchen Dicke versehen, dass eine ausreichende Aufschwimmkraft gebildet wird. So kann die wasserdichte Membran beispielsweise Luftblasen oder leichte Schaumstoffteilchen einschließen und dadurch genügende Aufschwimmkraft erzeugen. Die aufschwimmfähige Membran wird unterhalb der starren Ausgasungsplatte befestigt und am Rande mit der Ausgasungsplatte dicht miteinander verbunden, und befestigt. Mit anderen Worten können die Schwimmkörperteile oder Luftpolsterungen von unten auf die Membran aufgeklebt, in die Membran eingeschlossen, oder die Membran zumindest teilweise ganz aus einem solchen leichten und schwimmfähigen Material gefertigt werden. Für eine mit einem Schwimmkörper eine Membran ist es auch möglich, die Aufschwimmkraft durch einen separaten, von unten platzierten Schwimmkörper beizusteuern, ohne dass dieser mit der darüber befindlichen Membran zu einer Einheit verbunden ist.

Die gemäß dieser Erfindung konstruierten Belüftungselemente können verschiedene geometrische Formen einnehmen, beispielsweise runde Teller, rechteckige Großplatten mit einem oder mehreren Luftzufuhranschlüssen, schmale oder längliche Platten. An geeigneter Stelle, zum Beispiel in der Mitte einer runden Ausgasungsplatte, wird eine Öffnung angebracht und an das Druckluftverteilungssystem angeschlossen, um Druckluft zwischen der starren, perforierten Platte und der flexiblen, nicht luftdurchlässigen Membran zuzuführen.

Die vorgenannte Konstruktion hat den Vorteil, dass die Öffnungen für den Luftaustritt und Blasenbildung bereits geöffnet vorhanden sind, und nicht mehr durch Aufwendung von Energie geöffnet werden müssen. Zugleich können noch kleinere Öffnungsgrößen oder Öffnungsmaße gewählt werden, ohne zu befürchten, dass der Druckverlust beim Luftaustritt, bei passender Beaufschlagung, übermäßig ansteigen würde. Dadurch eröffnet sich auch die Möglichkeit, bei kleinerer Öffnungsgröße und deutlich höherer Öffnungsdichte kleinere gleichmäßige Blasen zu erzeugen und damit eine Verbesserung des Sauerstoffertrags zu erzielen.

Mit den gemäß dieser Erfindung konstruierten Belüftungselementen ist es weiterhin möglich, die Dichte der Lochungen so zu wählen, wie es verfahrenstechnisch benötigt wird, wie zum Beispiel kleinere Lochungen mit hoher Dichte für bessere Sauerstoffeintragseffizienz, oder größere Lochungen mit geringerer Dichte für eine bessere Durchmischungsleistung.

Weiterbildungen, Vorteile und Anwendungsmöglichkeiten der Erfindung ergeben sich auch aus der nachfolgenden Beschreibung eines Ausführungsbeispiels und der Zeichnung.

Es zeigen schematisch:
- Figur 1: einen Schnitt durch ein Belüftungselement nach dem Stand der Technik,
- Figur 2: einen Schnitt durch ein Belüftungselement im unbelasteten Zustand,
- Figur 3: einen Schnitt durch das Belüftungselement nach Figur 2 im mit Druck beaufschlagen Zustand,
- Figur 4: eine teilweise geschnittene Draufsicht auf das Belüftungselement nach den Figuren 2 und 3,
- Figur 5: in Schnittansicht ein Detail des Belüftungselements nach den Figuren 2 und 3,
- Figur 6: in Schnittansicht ein Detail eines alternativen Belüftungselements, und
- Figur 7: einen Schnitt durch ein Belüftungselement nach einer weiteren Ausführungsform.

Das in dem Ausführungsbeispiel der Figuren 2 bis 5 dargestellte Belüftungselement 11 weist einen zentralen Gasanschluss 12 auf, über den unter Druck stehende Luft in das Belüftungselement 11 eingebracht werden kann. Das Belüftungselement 11 ist im Wesentlichen durch einen Trägerteller 13 und eine an diesem befestigte Membran 14 gebildet. Der Trägerteller 13 ist in der dargestellten Ausführungsform eine flache Kreisscheibe aus einem steifen Material, beispielsweise Edelstahl oder Kunststoff. Der Trägerteller 13 ist mit einer Vielzahl von Gasaustrittsöffnungen 15 versehen, über die Luft aus dem Belüftungselement 11 austreten kann.

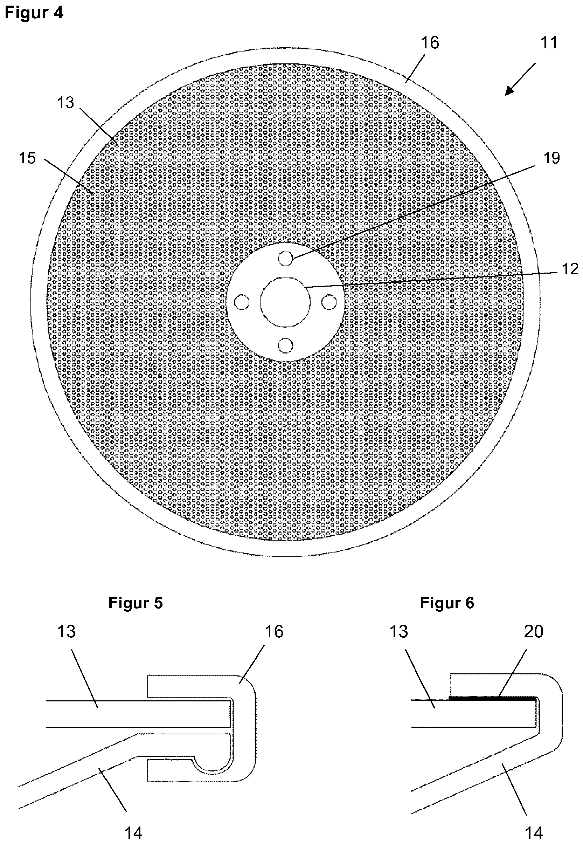

Die Membran 14 ist in der dargestellten Ausführungsform ebenfalls als eine Kreisscheibe gestaltet, die mittels eines Klemmelements 16 mit ihrem äußeren Rand an dem Trägerteller 13 befestigt ist. Wie aus der Detailansicht der Figur 5 zu erkennen ist, kann die Membran 14 hierzu mit einer Wulst an ihrem äußeren Rand versehen sein, die in eine entsprechende Ausnehmung des Klemmelements 16 eingreift. Die Membran 14 weist eine zentrale Öffnung auf, mit der sie an dem Gasanschluss 12 dichtenden anliegt bzw. über eine Verschraubung verbunden sein kann.

In der dargestellten Ausführungsform ist der Gasanschluss 12 mit einem kappenartigen Zentralluftverteiler 17 versehen, der beispielsweise dichtenden mit dem Trägerteller 13 verbunden ist. Über Durchtrittsöffnungen 19 in dem Trägerteller 13 kann Luft aus dem Gasanschluss 12 in einen Zwischenraum zwischen dem Trägerteller 13 und der Membran 14 gelangen. Hierdurch wird die Membran 14 aus ihrem in Figur 2 gezeigten, flach auf dem Trägerteller 13 aufliegenden Zustand in den in Figur 3 gezeigten Zustand überführt, in welchem sich die Membran 14 von dem Trägerteller 13 abhebt. Man erkennt hierbei, dass in dem Zustand der Figur 2 die Membran 14 die Gasaustrittsöffnungen 15 in dem Trägerteller 13 verschließt, wogegen die Gasaustrittsöffnungen 15 in Figur 3 nicht von der Membran 14 abgedeckt werden.

Auf der in den Figuren 2 und 3 unteren Seite der Membran 14 sind Schwimmkörper 18 angeordnet, die beispielsweise mit der Membran 14 verbunden sind. Alternativ hierzu können die Schwimmkörper 18 lediglich an der Membran 14 anliegen oder in die Membran 14 integriert sein. Insbesondere kann auch die Membran 14 selbst aus einem Material bestehen, das eine geringere Dichte als Wasser aufweist. Hierdurch wird die Membran 14 gegen den Trägerteller 13 gedrückt, wenn das Belüftungselement 11 in eine Flüssigkeit oder Schlamm eingetaucht wird. Dadurch werden die Gasaustrittsöffnungen 15 des Trägertellers 13 besonders wirksam von der Membran 14 verschlossen.

In der Draufsicht der Figur 4 ist der Zentralluftverteiler 17 geschnitten dargestellt, so dass der Gasanschluss 12 als eine zentrale Öffnung erkennbar ist. Weiter sind in dem dargestellten Beispiel vier Durchtrittsöffnungen 19 gezeigt, über die Druckluft aus dem Gasanschluss 12 über den Zentralluftverteiler 17 in den Zwischenraum zwischen dem Trägerteller 13 und der Membran 14 gelangen kann.

In Figur 6 ist eine Alternative zu der Befestigung der Membran 14 an dem Trägerteller 13 nach Figur 5 dargestellt. In dem Ausführungsbeispiel nach Figur 6 kann ein separates Klemmelement entfallen, wenn die Membran 14 mit der Trägerplatte 13 mittels einer Klebschicht 20 verklebt oder verschweißt ist. Hierzu kann die Membran 14 wie in Figur 6 dargestellt bis auf die in Einbaulage obere Seite der Trägerplatte 13 geführt werden und dort mit der Trägerplatte verbunden sein.

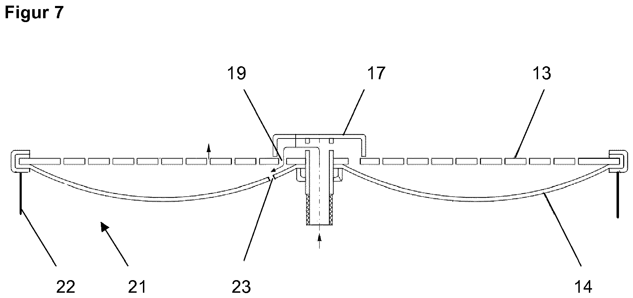

In Figur 7 ist eine weitere Ausführungsform eines Belüftungselements dargestellt. Hierbei ist der Schwimmkörper als ein ringsum umschlossener Gas- oder Luftpolster 21 ausgebildet, das auf der Unterseite (in der dargestellten Einbaulage) der Membran 14 vorgesehen ist. Dieses Gaspolster 21 kann nach unten durch eine nicht gezeigte weitere Membran geschlossen sein oder, wie in Figur 7 gezeigt, nach unten offen sei. Um ein seitliches Entweichen von Gas zu vermeiden, ist eine beispielsweise umlaufende Begrenzungswand 22 vorgesehen, die sich in dem dargestellten Beispiel von dem Klemmelement 16 aus nach unten erstreckt. Eine solche Begrenzungswand 22 kann jedoch auch direkt an der Membran 14 oder an der Trägerplatte 13 angebracht sein.

In der erstgenannten Alternative eines geschlossenen Gaspolsters 21 ist z.B. einfach unten eine zweite Membran (nicht dargestellt) anzubringen, die zum Beispiel mit einem Ventil versehen sein kann und bei der Installation mit Luft befüllt wird. Alternativ ist einfach nur eine Umwandung durch die Begrenzungswand 22 vorgesehen, die beim Betrieb mit Luft beispielweise über eine kleine Schlitzung oder dergleichen Öffnung 23 in der Membran 14 nach unten oder durch ein Ventil in sehr kleiner Dosierung befüllt wird. Die Öffnung 23 ist in Figur 7 zur Verdeutlichung ihrer Funktion stark vergrößert dargestellt. Sie kann in der Praxis erheblich kleiner sein. Bei einem Betriebsstopp sorgt dieses Gaspolster 21 dann für den nötigen Auftrieb und den Verschluss der Öffnungen 15 des Trägertellers 13 durch die Membran 14.

### Bezugszeichenliste:

- 1: Belüftungselement
- 2: Gasanschluss
- 3: Trägerplatte
- 4: Membran
- 5: Gasaustrittsöffnung

- 11: Belüftungselement
- 12: Gasanschluss
- 13: Trägerplatte
- 14: Membran
- 15: Gasaustrittsöffnung
- 16: Klemmelements
- 17: Zentralluftverteiler
- 18: Schwimmkörper
- 19: Durchtrittsöffnung
- 20: Verklebung
- 21: Gaspolster
- 22: Begrenzungswand
- 23: Öffnung

## Patentansprüche

1. Belüftungselement zum Einbringen eines Gases in eine Flüssigkeit mit wenigstens einem Gasanschluss (12), wenigstens einem Trägerteller (13) und wenigstens einer elastisch verformbaren Membran (14), die mit dem wenigstens einen Gasanschluss (12) und/oder dem wenigstens einen Trägerteller (13) verbunden ist, wobei ein zwischen der wenigstens einen Membran (14) und dem wenigstens einen Trägerteller (13) ausbildbarer Raum mit dem Gasanschluss (12) in Strömungsverbindung steht, wobei der wenigstens eine Trägerteller (13) eine Vielzahl von Gasaustrittsöffnungen (15) aufweist und die wenigstens eine Membran (14) zumindest abschnittsweise aus einem Material mit geringerer Dichte als Wasser besteht und/oder mit wenigstens einem Schwimmkörper (18) versehen ist, der eine geringere Dichte als Wasser aufweist, **dadurch gekennzeichnet, dass** die wenigstens eine Membran (14) zumindest abschnittsweise einen mehrschichtigen Aufbau aufweist, wobei zwischen zwei Schichten der wenigstens einen Membran (14) Schwimmkörper (18), die eine geringere Dichte als Wasser aufweisen, eingeschlossen sind.

2. Belüftungselement nach Anspruch 1, **dadurch gekennzeichnet, dass** der wenigstens eine Trägerteller (13) und die wenigstens eine Membran (14) als im unbelasteten Zustand zumindest bereichsweise aufeinanderliegende, beispielsweise kreisrunde, Scheiben ausgebildet sind, die an ihrem äußeren Rand hermetisch miteinander verbunden sind.

3. Belüftungselement nach Anspruch 2, **dadurch gekennzeichnet, dass** der wenigstens eine Trägerteller (13) und die wenigstens eine Membran (14) an ihrem äußeren Rand mittels eines Klemmelements (16) miteinander verbunden sind.

4. Belüftungselement nach Anspruch 2, **dadurch gekennzeichnet, dass** der wenigstens eine Trägerteller (13) und die wenigstens eine Membran (14) an ihrem äußeren Rand mittels einer Verklebung (20) und/oder Verschweißung miteinander verbunden sind.

5. Belüftungselement nach einem der vorhergehenden Ansprüche, **dadurch gekennzeichnet, dass** der wenigstens eine Trägerteller (13) aus einem steiferen Material besteht als die wenigstens eine Membran (14), insbesondere aus Metall oder Kunststoff.

6. Belüftungselement nach einem der vorhergehenden Ansprüche, **dadurch gekennzeichnet, dass** der wenigstens eine Trägerteller (13) mit einer Beschichtung und/oder Ausrüstung versehen ist, die das Abperlen von Gasblasen erleichtert.

7. Belüftungselement nach einem der vorhergehenden Ansprüche, **dadurch gekennzeichnet, dass** der wenigstens eine Trägerteller (13) mit einer Beschichtung und/oder Ausrüstung versehen ist, die bakteriellen Bewüchsen, Verschmutzungen und/oder Ablagerungen entgegenwirkt.

8. Belüftungselement nach einem der vorhergehenden Ansprüche, **dadurch gekennzeichnet, dass** die wenigstens eine Membran (14) eine weiche, flexible Kunststoffmembran ist, die aus einem wasser- und luftdichten Material besteht.

9. Belüftungselement nach einem der vorhergehenden Ansprüche, **dadurch gekennzeichnet, dass** zwischen zwei Schichten der wenigstens einen Membran (14) Luftblasen eingeschlossen sind.

10. Belüftungselement nach einem der vorhergehenden Ansprüche, **dadurch gekennzeichnet, dass** die wenigstens eine Membran (14) auf ihrer dem wenigstens einen Trägerteller (13) abgewandten Seite mit wenigstens einem Schwimmkörper (18), der eine geringere Dichte als Wasser aufweist, verbunden ist und/oder ein offenes oder geschlossenes Gaspolster (21) aufweist.

## Claims

1. A ventilation element for introducing a gas into a liquid, having at least one gas connection (12), at least one support plate (13) and at least one elastically deformable membrane (14), which is connected to the at least one gas connection (12) and/or the at least one support plate (13), a space that can be formed between the at least one membrane (14) and the at least one support plate (13) being in flow connection with the gas connection (12), the at least one support plate (13) having a multiplicity of gas outlet openings (15) and the at least one membrane (14) consisting at least in certain sections of a material with a lower density than water and/or being provided with at least one float (18), which has a lower density than water, **characterized in that** the at least one membrane (14) has a multi-layered structure at least in certain sections, wherein floats (18), which have a lower density than water, are enclosed between two layers of the at least one membrane (14) .

2. The ventilation element according to Claim 1, **characterized in that** the at least one support plate (13) and the at least one membrane (14) are constructed as, for example circular, discs which lie on top of one another at least in certain sections in the unloaded state and which are hermetically connected to one another at their outer edge.

3. The ventilation element according to Claim 2, **characterized in that** the at least one support plate (13) and the at least one membrane (14) are connected to one another at their outer edge by means of a clamping element (16) .

4. The ventilation element according to Claim 2, **characterized in that** the at least one support plate (13) and the at least one membrane (14) are connected to one another at their outer edge by means of an adhesive bond (20) and/or weld.

5. The ventilation element according to one of the preceding claims, **characterized in that** the at least one support plate (13) consists of a stiffer material than the at least one membrane (14), particularly of metal or plastic.

6. The ventilation element according to one of the preceding claims, **characterized in that** the at least one support plate (13) is provided with a coating and/or finish, which facilitates the pearling of gas bubbles.

7. The ventilation element according to one of the preceding claims, **characterized in that** the at least one support plate (13) is provided with a coating and/or finish, which counteracts bacterial fouling, contaminants and/or deposits.

8. The ventilation element according to one of the preceding claims, **characterized in that** the at least one membrane (14) is a soft, flexible plastic membrane, which consists of a water- and airtight material.

9. The ventilation element according to one of the preceding claims, **characterized in that** air bubbles are enclosed between two layers of the at least one membrane (14) .

10. The ventilation element according to one of the preceding claims, **characterized in that** the at least one membrane (14), on its side facing away from the at least one support plate (13), is connected to at least one float (18), which has a lower density than water, and/or has an open or closed gas cushion (21).

## Revendications

1. Élément de ventilation, destiné à introduire un gaz dans un liquide, pourvu d'au moins un raccordement au gaz (12), d'au moins un disque de support (13) et d'au moins une membrane (14) élastiquement déformable, qui est reliée avec l'au moins un raccordement au gaz (12) et/ou avec l'au moins un disque de support (13), un espace susceptible d'être créé entre l'au moins une membrane (14) et l'au moins un disque de support (13) étant en liaison fluidique avec le raccordement au gaz (12), l'au moins un disque de support (13) comportant une pluralité d'orifices de sortie du gaz (15) et l'au moins une membrane (14) étant constituée au moins par endroits d'une matière de densité moindre que celle de l'eau et/ou étant munie d'au moins un corps flottant (18) qui fait preuve d'une densité moindre que celle de l'eau, **caractérisé en ce que** l'au moins une membrane (14) comporte au moins par endroits une structure multicouches, entre deux couches de l'au moins une membrane (14) étant inclus des corps flottant (18), qui font preuve d'une densité moindre que celle de l'eau.

2. Élément de ventilation selon la revendication 1, **caractérisé en ce que** l'au moins un disque de support (13) et l'au moins une membrane (14) sont conçus sous la forme de plaques superposées au moins par endroits à l'état non chargé, par exemple de forme circulaire, qui sur leur bord extérieur sont reliées les unes aux autres de manière hermétique.

3. Élément de ventilation selon la revendication 2, **caractérisé en ce que** l'au moins un disque de support (13) et l'au moins une membrane (14) sont reliés l'un à l'autre sur leur bord extérieur au moyen d'un élément de serrage (16) .

4. Élément de ventilation selon la revendication 2, **caractérisé en ce que** l'au moins un disque de support (13) et l'au moins une membrane (14) sont reliés l'un à l'autre sur leur bord extérieur au moyen d'un collage (20) et/ou d'une soudure.

5. Élément de ventilation selon l'une quelconque des revendications précédentes, **caractérisé en ce que** l'au moins un disque de support (13) est constitué d'une matière plus rigide que l'au moins une membrane (14), notamment de métal ou de matière plastique.

6. Élément de ventilation selon l'une quelconque des revendications précédentes, **caractérisé en ce que** l'au moins un disque de support (13) est muni d'un revêtement et/ou d'un équipement qui facilite le déperlement de bulles de gaz.

7. Élément de ventilation selon l'une quelconque des revendications précédentes, **caractérisé en ce que** l'au moins un disque de support (13) est muni d'un revêtement et/ou d'un équipement qui lutte contre l'invasion bactérienne, les salissures et/ou les dépôts.

8. Élément de ventilation selon l'une quelconque des revendications précédentes, **caractérisé en ce que** l'au moins une membrane (14) est une membrane en matière plastique douce, souple qui est constituée d'une matière étanche à l'eau et à l'air.

9. Élément de ventilation selon l'une quelconque des revendications précédentes, **caractérisé en ce qu'**entre deux couches de l'au moins une membrane (14) sont incluses des bulles d'air.

10. Élément de ventilation selon l'une quelconque des revendications précédentes, **caractérisé en ce que** sur sa face opposée à l'au moins un disque de support (13), l'au moins une membrane (14) est reliée avec au moins un corps flottant (18), qui fait preuve d'une densité moindre que celle de l'eau et/ou comporte un coussin gazeux (21) ouvert ou fermé.
